Europäisches Patentamt

European Patent Office

Office européen des brevets

(19)

(11) Numéro de publication: **0 332 540**
**A1**

## (12) DEMANDE DE BREVET EUROPEEN

(21) Numéro de dépôt: **89400679.0**

(22) Date de dépôt: **10.03.89**

(51) Int. Cl.⁴: **G 02 C 5/16**

(30) Priorité: **11.03.88 FR 8803225**

(43) Date de publication de la demande:
**13.09.89 Bulletin 89/37**

(84) Etats contractants désignés:
**BE CH DE ES GB IT LI NL SE**

(71) Demandeur: **ESSILOR INTERNATIONAL Cie Générale d'Optique**
**1 Rue Thomas Edison Echat 902**
**F-94028 Creteil Cédex (FR)**

**BRUNET-SICAP**
**42 Rue du Temple**
**F-62800 Lievin (FR)**

**CEBE INTERNATIONAL**
**12 Avenue Charles de Gaulle**
**F-39400 Morez (FR)**

(72) Inventeur: **Ven, Olivier**
**11i-40 Rue des Tisserands**
**F-59100 Roubaix (FR)**

(74) Mandataire: **CABINET BONNET-THIRION**
**95 Boulevard Beaumarchais**
**F-75003 Paris (FR)**

(54) **Structure composite déformable, structure composite rigide résultant d'une telle structure composite déformable, et applications, notamment aux montures de lunettes.**

(57) Une structure composite suivant l'invention est caractérisée en ce que, globalement longiligne, elle comporte de manière concentrique, autour d'un noyau (11) qui s'étend sur toute sa longueur, une succession de couches, dont une, (12A), au moins, constitue un produit textile dont les fils constitutifs sont en un matériau communément dit technique, tel que carbone, verre ou aramide par exemple, et/ou en matériau classique, tel que matière végétale, matière artificielle, matière synthétique ou matériau métallique par exemple, et dont une autre, (12B), au moins, dite matrice, est en matière thermoplastique, avec la présence, au moins, d'une telle matrice (12B) à la périphérie de l'ensemble.

Application, notamment, à la réalisation de composants pour montures de lunettes.

FIG.1

EP 0 332 540 A1

**Description**

**Structure composite déformable, structure composite rigide résultant d'une telle structure composite déformable, et applications, notamment aux montures de lunettes**

La présente invention concerne d'une manière générale les structures composites, c'est-à-dire celles alliant des matériaux de différentes natures.

C'est le cas, par exemple, des composants de certaines montures de lunettes, et notamment de leurs branches.

Il est connu, en effet, pour réaliser de telles branches de lunettes, de surmouler de la matière synthétique, et plus précisément de la matière thermoplastique, autour d'un insert central réalisé par exemple en métal.

Bien qu'un tel processus donne satisfaction, sa mise en oeuvre n'est pas sans soulever des difficultés, notamment pour l'obtention d'une bonne uniformité de répartition de la matière synthétique autour de l'insert central.

En outre, les réalisations correspondantes sont relativement lourdes.

Enfin, globalement, la forme de ces réalisations se trouve directement figée une fois pour toutes lors même du processus de surmoulage, même si, ultérieurement, par réchauffage, elle est susceptible d'être légèrement modifiée pour adaptation au patient concerné.

La présente invention a d'une manière générale pour objet une structure composite permettant d'éviter ou minimiser ces inconvénients et conduisant en outre à d'autres avantages.

De manière plus précise, elle a tout d'abord pour objet une structure composite déformable caractérisée en ce que, globalement longiligne, elle comporte, de manière concentrique autour d'un noyau qui s'étend sur toute sa longueur, une succession de couches, dont une, au moins, dite ci-après par simple commodité couche technique, constitue un produit textile dont les fils constitutifs sont en matériau communément dit technique, tel que carbone, verre ou aramide par exemple, et/ou en matériau classique, tel que matière végétale, matière artificielle, matière synthétique, ou matériau métallique par exemple, et dont une autre, au moins, dite ci-après, par simple commodité, matrice, est en matière thermoplastique, avec la présence, au moins, d'une telle matrice à la périphérie de l'ensemble.

Préférentiellement, le noyau comporte un réseau unidirectionnel de fils et il associe des fils en matériau technique à des fils en matière thermoplastique propres eux aussi à jouer le rôle d'une matrice.

Quoi qu'il en soit, cette structure composite déformable constitue avantageusement un produit semi-fini intermédiaire dans le processus de réalisation d'une structure composite rigide au cours duquel il est simultanément appliqué de la chaleur et de la pression à cette structure composite déformable, ce qui conduit toute matrice qu'elle comporte à fondre et à ainsi se mêler à ses autres constituants, avant de durcir en se refroidissant.

La présente invention a encore pour objet une telle structure composite rigide, et tout composant, et en particulier tout composant de montures de lunettes, correspondant.

Globalement, et sous un premier aspect, la structure composite suivant l'invention se caractérise, donc, notamment, par l'association d'un ou plusieurs matériaux techniques à un ou plusieurs matériaux classiques.

L'apport ainsi fait de matériaux techniques permet de moduler à son gré les propriétés, et notamment les propriétés mécaniques, de l'ensemble.

Certes, il est déjà connu des structures composites mettant ainsi en oeuvre un ou plusieurs matériaux techniques.

Mais, usuellement, l'apport correspondant se fait sous la forme de fibres relativement courtes noyées dans une masse en matière synthétique.

Le mélange ne peut dans ce cas se faire qu'au dernier moment, lors même de la mise en volume de l'ensemble.

Il n'en est pas de même avec la structure composite suivant l'invention, dans laquelle, au contraire, suivant un autre de ses aspects, les matériaux mis en oeuvre se présentent, tous, dès l'origine, sous la forme de fils allongés, sinon sur toute la longueur d'une telle structure, au moins sur une portion majeure de celle-ci.

Il en résulte une remarquable facilité de mise en oeuvre pour l'ensemble.

Il en résulte, également, la possibilité de disposer, sous la forme de la structure composite déformable suivant l'invention, d'un produit semi-fini intermédiaire, qui, associant déjà l'ensemble des constituants de la structure composite rigide finale recherchée, permet de manière simple un stockage de ces constituants, sans précaution particulière pour ceux-ci, et est ensuite d'une mise en oeuvre immédiate, en se prêtant, en outre, dans l'intervalle, par traction, compression, ou, d'une manière générale, déformation, à toute mise en forme désirée.

Corollairement, et sans opération supplémentaire, il est avantageusement possible, avec les constituants de la structure composite suivant l'invention, qui, suivant encore un autre aspect, est une structure multi-couches, d'obtenir, par un choix approprié de ces constituants, et/ou de leurs dispositions relatives, des effets esthétiques de décoration particuliers.

Cette possibilité, alliée à celle de l'obtention d'une certaine finesse et d'une grande légèreté pour l'ensemble, est de nature à favoriser la mise en oeuvre de la structure composite suivant l'invention pour les produits pour lesquels ces qualités ont une importance non négligeable, comme cela est le cas pour les divers composants des montures de lunettes.

Les caractéristiques et avantages de l'invention ressortiront, d'ailleurs, de la description qui va suivre, à titre d'exemple, en référence aux dessins schématiques annexés sur lesquels :

la figure 1 est, avec des arrachements successifs, une vue partielle en élévation d'une structure composite déformable suivant l'invention ;

la figure 2 en est une vue en coupe transversale, suivant la ligne II-II de la figure 1 ;

la figure 3 est, à échelle supérieure, une vue partielle en élévation, suivant la flèche III de la figure 2, d'une des couches constitutives de cette structure composite déformable ;

la figure 4 est, à échelle encore supérieure, une vue transversale en coupe, suivant la ligne IV-IV de la figure 3, d'un des fils constitutifs de cette couche ;

les figures 5 et 6 sont des vues en coupe transversale qui, analogues à celle de la figure 4, se rapportent chacune respectivement à une variante de réalisation ;

les figures 7 et 8 sont des vues qui, analogues chacune respectivement à celles des figures 1 et 2, se rapportent à une structure composite rigide susceptible d'être obtenue, suivant l'invention, à partir de la structure composite déformable précédente ;

la figure 9 est une vue en perspective éclatée d'une monture de lunettes dont les composants principaux sont chacun constitués d'une structure rigide composite suivant l'invention.

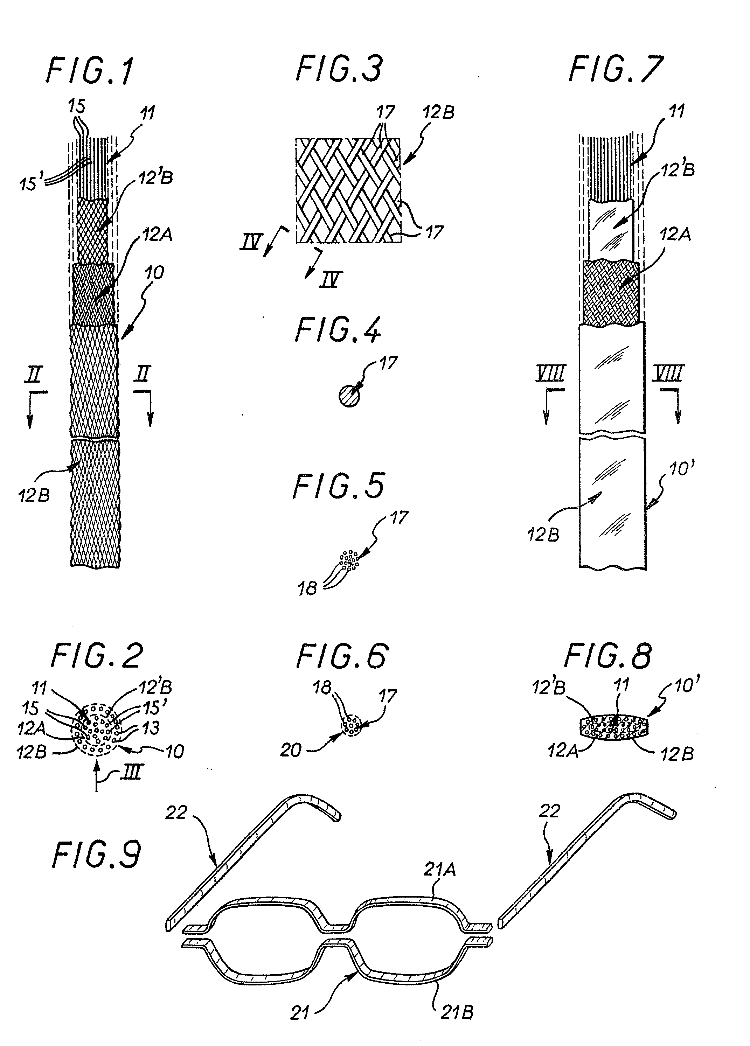

Tel qu'illustré sur la figure 1, une structure composite déformable 10 suivant l'invention est globalement longiligne, et elle comporte, de manière concentrique, autour d'un noyau 11 qui s'étend sur toute sa longueur, une pluralité de couches, qui, distinctes les unes des autres, ne sont initialement pas enchevêtrées les unes avec les autres, et dont certaines, au moins, ne s'étendent pas nécessairement de manière continue sur la totalité de la longueur de noyau 11.

Suivant l'invention, il y a ainsi au moins une couche 12A, dite ici par simple commodité couche technique constituant un produit textile dont les fils constitutifs 13 sont en matériau communément dit technique, tel que carbone, verre ou aramide par exemple, et/ou en matériau classique, tel que matière végétale, matière artificielle, matière synthétique ou matériau métallique par exemple, et au moins une couche 12B, dite ici par simple commodité matrice, réalisée, elle, en matière thermoplastique, avec la présence, au moins, d'une telle matrice 12B à la périphérie de l'ensemble.

Dans la forme de réalisation représentée sur les figures 1 et 2, il y a ainsi, de la périphérie de l'ensemble vers l'axe de celui-ci, une matrice 12B, une couche technique 12A, une deuxième matrice 12′B, ou matrice intermédiaire, et le noyau 11.

En pratique, ce noyau 11 comporte un réseau unidirectionnel de fils tous allongés suivant la direction d'allongement de l'ensemble.

Par exemple, il associe ainsi, mais sans lien entre eux, des fils 15 en matériau technique à des fils 15′ en matière thermoplastique jouant eux aussi le rôle de matrice.

La matrice périphérique que constitue par ailleurs la couche 12B se présente sous l'une quelconque des formes suivantes : produit textile, tel que par exemple tresse tubulaire ou tricot tubulaire, ou gaine.

Dans la forme de réalisation représentée, il s'agit, à titre d'exemple, d'une tresse tubulaire.

Comme il est mieux visible sur la figure 3, les fils 17 constitutifs de cette matrice 12B sont donc, ici, entrecroisés.

Certains, au moins, de ces fils 17 peuvent être constitués d'un seul filament.

C'est le cas dans la forme de réalisation représentée sur la figure 4.

En variante, certains au moins de ces fils 17 sont constitués d'une pluralité de filaments ou réseaux filamentaires 18.

C'est le cas dans la forme de réalisation représentée à la figure 5.

En variante, encore, les filaments ou réseaux filamentaires 18 ainsi constitutifs d'un fil 17 de la matrice 12B peuvent être enserrés dans une enveloppe tubulaire 20, telle que par exemple un produit textile ou une gaine.

C'est le cas dans la forme de réalisation représentée sur la figure 6.

Quoi qu'il en soit, les fils 17 ainsi constitutifs de cette matrice 12B peuvent être des fils droits, c'est-à-dire des fils, dépourvus de toute torsion, ou, en variante, être, des fils retors.

Il en est de même pour les filaments ou réseaux filamentaires correspondants.

Corollairement, le produit textile que constitue la couche technique 12A se présente sous l'une quelconque des formes suivantes : tresse tubulaire, réseau unidirectionnel de fils.

Dans la forme de réalisation représentée sur les figures 1 et 2, il s'agit, à titre d'exemple, d'une tresse tubulaire.

Comme précédemment, les figures que comporte un telle tresse tubulaire peuvent être constitués d'un seul filament, ou d'une pluralité de filaments ou réseaux filamentaires.

Dans ce dernier cas, ils peuvent être enserrés dans une enveloppe tubulaire, telle que par exemple un produit textile ou une gaine.

Compte tenu de ce que, dans la forme de réalisation représentée, le noyau 11 constitue à la fois une matrice et une couche technique, la matrice intermédiaire 12′B s'étend, dans cette forme de réalisation, entre deux couches techniques.

Elle peut se présenter sous l'une quelconque des formes suivantes : produit textile, tel que par exemple tresse tubulaire, tricot tubulaire, ou réseau unidirectionnel de fils ; gaine ; couche poudreuse.

En l'espèce, il s'agit, à titre d'exemple, d'une tresse tubulaire, analogue à celle constitutive de la matrice périphérique 12B.

Si désiré, l'une au moins des couches ainsi constitutives de la structure composite déformable 10 suivant l'invention peut être l'objet, au moins localement, d'un traitement, tel que poudrage thermoplastique, ensimage, guipage, adjonction d'une quelconque charge ou d'un quelconque additif, et, s'agissant d'un produit textile, angulation ou désangulation.

Ainsi qu'on le sait l'angulation d'une tresse tubulaire résulte de l'application d'une traction à celle-ci, et sa désangulation de l'application d'une poussée.

L'une quelconque des tresses mises en oeuvre peut ainsi être l'objet, radialement, et au moins localement, d'un rétreint, ou d'une expansion.

Dans la forme de réalisation représentée, elles gardent l'une et l'autre le même diamètre sur toute leur longueur.

Corollairement, dans cette forme de réalisation, les couches mises en oeuvre s'étendent chacune sur la totalité de la longueur de la structure composite déformable 10 à la constitution de laquelle elles participent.

Mais, en variante, l'une au moins pourrait tout aussi bien ne s'étendre que sur une partie de cette longueur, en étant par exemple interrompue localement en un point au moins de celle-ci.

Quoi qu'il en soit, celles de ces couches qui constituent un produit textile peuvent avantageusement résulter d'un tissage simultané, cependant que les autres peuvent, corollairement, être avantageusement mises en place au fur et à mesure de l'exécution d'un tel tissage.

Ainsi, la structure composite déformable suivant l'invention peut avantageusement être réalisée à l'avance pour l'ensemble de ses constituants.

Par application simultanée de pression et de chaleur, par exemple au sein d'un moule, cette structure composite déformable 10 donne naissance à une structure composite rigide 10', figures 7 et 8.

Sans autre, et tel que représenté, cette structure déformable rigide 10' s'étend de manière rectiligne, suivant la direction générale d'allongement de la structure composite déformable 10 dont elle est issue.

Mais, il va de soi que, par choix d'une empreinte appropriée dans la moule mis en oeuvre, il est possible de lui donner une configuration quelconque.

C'est ainsi que, par exemple, tel qu'illustré par la figure 9, il est possible de réaliser, à l'aide de structures composites rigides suivant l'invention, des composants de monture de lunettes, et par exemple, tel que représenté, deux parties de face 21A, 21B, en l'espèce des demi-faces, propres à former conjointement le face 21 d'une telle monture de lunettes, et/ou les branches latérales de support 22 de celle-ci.

Bien entendu, la monture de lunettes correspondante se complète pas les tenons et charnons propres à assurer l'assemblage à articulation des branches latérales de support 22 aux faces 21.

Quoi qu'il en soit, au sein des structures composites rigides que constitue alors chacun des composants de cette monture de lunettes, la ou les matrices en matière thermoplastique 12B, 12'B que comporte une telle structure composite rigide se sont mêlées, par fusion, aux autres constituants de celle-ci, avant de durcir en se refroidissant.

Il en résulte que, comme représenté à la figure 8, cette ou ces matrices 12B, 12'B, ainsi dûment fondues et durcies au refroidissement, forment conjointement une masse en matière thermoplastique, qui est rigide, et qui comporte, tels quels, en son sein, ceux au moins des fils ou réseaux filamentaires qui, également mis en oeuvre par ailleurs, n'ont pas été affectés par une telle fusion, comme cela est normalement le cas de ceux en matériau technique ou de ceux en matériau métallique.

Ces fils peuvent dès lors individuellement participer à l'effet esthétique de l'ensemble.

Bien entendu, la présente invention ne se limite pas à la forme de réalisation décrite et représentée, mais elle englobe toute variante d'exécution.

En outre, le domaine d'application de l'invention n'est pas limité à celui de la seule réalisation de composants pour montures de lunettes, mais il s'étend aussi bien à la constitution d'autres articles, et par exemple d'articles sportifs, tels que les raquettes de tennis.

**Revendications**

1. Structure composite déformable, caractérisée en ce que, globalement longiligne, elle comporte, de manière concentrique autour d'un noyau (11) qui s'étend sur toute sa longueur, une succession de couches, dont une, (12A), au moins, dite ci-après par simple commodité couche technique, constitue un produit textile dont les fils constitutifs sont en matériau communément dit technique tel que carbone, verre ou aramide par exemple, et/ou en matériau classique tel que matière végétale, matière artificielle, matière synthétique ou matériau métallique par exemple, et dont une autre (12B, 12'B), au moins, dite ci-après, par simple commodité, matrice, est en matière thermoplastique, avec la présence, au moins, d'une telle matrice (12B) à la périphérie de l'ensemble.

2. Structure composite déformable suivant la revendication 1, caractérisée en ce que le noyau (11) comporte un réseau unidirectionnel de fils.

3. Structure composite déformable suivant l'une quelconque des revendications 1, 2, caractérisée en ce que le noyau (11) associe des fils (15) en matériau technique à des fils (15') en matière thermoplastique jouant le rôle de matrice.

4. Structure composite déformable suivant l'une quelconque des revendications 1 à 3, caractérisée en ce que le produit textile que constitue une couche technique (12A) se présente sous l'une quelconque des formes suivantes : tresse tubulaire, tricot tubulaire, réseau unidirectionnel de fils.

5. Structure composite déformable suivant l'une quelconque des revendications 1 à 4, caractérisée en ce qu'elle comporte au moins une matrice intermédiaire (12'B).

6. Structure composite déformable suivant la revendication 5, caractérisée en ce qu'une matrice intermédiaire (12'B) se présente sous s'une quelconque des formes suivantes : produit textile, tel que par exemple tresse tubulaire, tricot tubulaire, ou réseau unidirectionnel de fils ; gaine ; couche poudreuse.

7. Structure composite déformable suivant l'une quelconque des revendications 1 à 6, caractérisée en ce que la matrice périphérique (12B) se présente sous l'une quelconque des formes suivantes : produit textile, tel que par exemple tresse tubulaire ou tricot tubulaire ; gaine.

8. Structure composite déformable suivant l'une quelconque des revendications 1 à 7, caractérisée en ce que certains au moins des fils (17) qu'elle comporte sont des fils constitués d'un seul filament.

9. Structure composite déformable suivant l'une quelconque des revendications 1 à 8, caractérisée en ce que certains au moins des fils (17) qu'elle comporte sont constitués d'une pluralité de filaments ou réseaux filamentaires (18).

10. Structure composite déformable suivant la revendication 9, caractérisée en ce que les filaments ou réseaux filamentaires (18) constitutifs d'un fil (17) sont enserrés dans une enveloppe tubulaire (20), telle que par exemple produit textile ou gaine.

11. Structure composite déformable suivant l'une quelconque des revendications 1 à 10, caractérisée en ce que certains au moins des fils (17), filaments ou réseaux filamentaires (18) qu'elle comporte sont dépourvus de toute torsion.

12. Structure composite déformable suivant l'une quelconque des revendications 1 à 10, caractérisée en ce que certains au moins des fils (17), filaments ou réseaux filamentaires (18) qu'elle comporte sont retors.

13. Structure composite déformable suivant l'une quelconque des revendications 1 à 12, caractérisée en ce que l'une au moins des couches (12A, 12B, 12'B) qui la constituent a été l'objet, au moins localement, d'un traitement tel que poudrage thermoplastique, ensimage, guipage, adjonction d'une quelconque charge ou d'un quelconque additif, et, s'agissant d'un produit textile, angulation ou désangulation.

14. Structure composite déformable suivant l'une quelconque des revendications 1 à 13, caractérisée en ce que les couches (12A, 12B, 12'B) qui la constituent s'étendent toutes sur la totalité de sa longueur.

15. Structure composite déformable suivant l'une quelconque des revendications 1 à 13, caractérisée en ce que l'une au moins des couches (12A, 12B, 12'B) qui la constituent ne s'étend que sur une partie de sa longueur.

16. Structure composite déformable suivant la revendication 15, caractérisée en ce que ladite couche (12A, 12B, 12'B) est interrompue localement en un point au moins de sa longueur.

17. Structure composite déformable suivant l'une quelconque des revendications 1 à 16, caractérisée en ce que celles de ses couches (12A, 12B, 12'B) qui constituent un produit textile résultent d'un tissage simultané.

18. Structure composite rigide, caractérisée en ce que, résultant de l'application simultanée de pression et de chaleur à une structure composite déformable suivant l'une quelconque des revendications 1 à 17, toute matrice qu'elle comporte, dûment fondue et durcie au refroidissement, se trouve mêlée à ses autres constituants.

19. Structure composite rigide suivant la revendication 18, caractérisée en ce qu'elle constitue un composant de monture de lunettes, tel que par exemple branche (22) ou partie de face (21A, 21B).

*FIG.1*

*FIG.3*

*FIG.7*

*FIG.4*

*FIG.5*

*FIG.2*

*FIG.6*

*FIG.8*

*FIG.9*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 594 234 (ESSILOR INTERNATIONAL) * Revenidactions * | 1 | G 02 C 5/16 |
| A | EP-A-0 254 686 (SAFILO) * Revendications * | 1 | |
| A | FR-A-2 515 831 (NIPPON GAKKI SEIZO K.K.) * Revendications * | 1 | |
| A | FR-A-2 574 568 (MARGA S.A.) * Revendications * | 1 | |
| A | FR-A-2 374 656 (ROLLEX S.N.C. ACCESSOIRES POUR LUNNETTES DE ZANELLA) * Revendications * | 1 | |
| A | US-A-4 133 604 (R.B. FULLER) * Revendications * | 4,6 | |

DOMAINES TECHNIQUES
RECHERCHES (Int. Cl.4)

G 02 C 5/16
G 02 C 5/00
G 02 C 3/00

Le présent rapport a été établi pour toutes les revendications

| Lieu de la recherche | Date d'achèvement de la recherche | Examinateur |
|---|---|---|
| LA HAYE | 05-06-1989 | CALLEWAERT-HAEZEBROUCK H |